# EUROPEAN PATENT APPLICATION

(11) **EP 1 480 388 A2**
(43) Date of publication of application: **24.11.2004**
(21) Application number: 04009891.5
(22) Date of filing: 26.04.2004
(51) Int. Cl.: H04L 12/28

(54) **Wireless network clustering communication system and corresponding access port**

(30) Priority: 19.05.2003 US 440725
(71) Applicant: EATON CORPORATION, Cleveland, Ohio 44114-2584 (US)
(72) Inventor: Gutierrez, Jose Alejandro, Brookfield, Wisconsin 53005 (US); Luebke, Charles John, Sussex, Wisconsin 53089 (US)
(74) Representative: Emde, Eric

(57) **Abstract**

A wireless communication network includes a plurality of network coordinators communicating over a first wireless area network, such as an IEEE 802.11 wireless local area network. A plurality of network devices communicate over a second wireless personal area network, such as an IEEE 802.15.4 wireless network. One or more of the network coordinators may be hybrid access points for the corresponding network devices to access the first wireless area network. The hybrid access points include a first wireless transceiver communicating over the first wireless area network, a second wireless transceiver communicating over the corresponding second wireless network, and a processor coordinating communications between the first wireless area network and the corresponding second wireless network.

## Description

### Field of the Invention

This invention relates generally to communication networks and, more particularly, to wireless communication networks, such as, for example, a wireless local area network (WLAN) or a low rate - wireless personal area network (LR-WPAN). The invention also relates to access points for wireless communication networks.

### Background Information

Wireless communication networks are an emerging new technology, which allows users to access information and services electronically, regardless of their geographic position. Wireless communication networks may be classified in two types: (1) infra-structured based networks (*e.g.*, star-type with access points to a wired backbone, such as Ethernet); and (2) infra-structureless networks (*e.g.*, mesh-type (or ad-hoc)).

An infra-structured network includes a communication network with fixed and wired gateways. A mobile unit or host communicates with a bridge in the network (called a base station) within its communication radius. The mobile host can move geographically while it is communicating. When it goes out of range of one base station (or access point), it connects with a new base station and starts communicating through it. This is called handoff. In this approach, the base stations are fixed and include one or more wired network components.

In contrast to infra-structured networks, all nodes in ad-hoc networks are potentially mobile and can be connected dynamically in an arbitrary manner. All nodes of these networks behave as routers and take part in discovery and maintenance of routes to other nodes in the network. For example, ad-hoc networks are very useful in emergency search-and-rescue operations, meetings or conventions in which persons wish to quickly share information, and in data acquisition operations in inhospitable terrains.

An ad-hoc mobile communication network comprises a plurality of mobile hosts, each of which is able to communicate with its neighboring mobile hosts, which are a single hop away. In such a network, each mobile host acts as a router forwarding packets of information from one mobile host to another. These mobile hosts communicate with each other over a wireless media without any infra-structured (or wired) network component support.

One type of on-demand ad-hoc routing protocol is Dynamic Source Routing (DSR). A conventional DSR network enables communications between any devices in such network by discovering communication routes to other devices in the network. See, for example, Johnson et al., "Dynamic Source Routing in Ad Hoc Wireless Networks", Mobile Computing, 1996. Dynamic Source Routing for mobile communication networks avoids periodic route advertisements because route caches are used to store source routes that a mobile host has learned over time. A combination of point-to-point and broadcast routing using the connection-oriented packet forwarding approach is used. Routes are source-initiated and discovered via a route discovery protocol. With source routing, the sender explicitly lists the route in each packet's header, so that the next-hop nodes are identified as the packet travels towards the destination. Cached route information is used and accurate updates of these route caches are essential, otherwise routing loops can occur. Since the sender has to be notified each time a route is truncated, the route maintenance phase does not support fast route reconstruction. See, also, U.S. Patent Nos. 6,167,025; 6,034,961; and 5,987,011.

The DSR protocol appends a complete list of addresses from the source to the destination for both upstream and downstream (*i.e.*, bi-directional) communications. That is, each device in a DSR network knows the entire path to another device, although this stored path may dynamically change.

The transmission range (or distance) of a wireless communication network device (ND) is constrained within a building due to the maximum allowed transmission power, and by radio frequency attenuation from interior structures of the building. Hence, wired access points to a wired network (*e.g.*, Ethernet) are typically required to serve and network a relatively large physical area.

In contrast to wired networks, mesh-type, low rate - wireless personal area network (LR-WPAN) wireless communication networks are intended to be relatively low power, to be self-configuring, and to not require any communication infrastructure (*e.g.*, wires) other than power sources.

Whenever an LR-WPAN is applied to a relatively large configuration ofNDs, there is a corresponding increased demand for wireless communication network bandwidth due to the forwarding of messages through the network. Current implementations typically require that all of the LR-WPAN NDs are within communication range of an access point to a wired network, such as Ethernet.

There exists the need to simplify the installation of communication networks.

There is also the need to reduce the cost of materials (e.g., wiring; conduits for wiring) and manpower associated with the installation of communication networks.

There is further the need to simplify the deployment of ad-hoc communication networks.

There is room for improvement in wireless communication networks and systems.

### SUMMARY OF THE INVENTION

These needs and others are met by the present invention, which employs wireless access points (*e.g.*, employing IEEE 802.11 (WLAN)), in order that no wired infrastructure is required. Such a wireless access point may serve, for example, as a "regional" network coordinator (NC) to a plurality of lower level, low rate - wireless personal area network (LR-WPAN) network devices (NDs).

As one aspect of the invention, a wireless communication network comprises: a plurality of first devices communicating over a first wireless area network; and a plurality of second network devices communicating over a second wireless network, wherein one of the first devices comprises a first wireless transceiver communicating over the first wireless area network, a second wireless transceiver communicating over the second wireless network, and a processor coordinating communications between the first wireless area network and the second wireless network.

The one of the first devices may be a network coordinator of the second network devices of the second wireless network. The first wireless area network may be a mesh-type or star-type wireless local area network.

The second wireless network may be a star-type wireless personal area network. The one of the first devices may be a network coordinator of the star-type wireless personal area network. All of the second network devices may communicate directly with the network coordinator over the star-type wireless personal area network.

The second wireless network may be a mesh-type wireless personal area network. The one of the first devices may be a network coordinator of the mesh-type wireless personal area network. At least some of the second network devices may communicate with the network coordinator through at least another one of the second network devices over the mesh-type wireless personal area network.

As another aspect of the invention, a wireless network clustering communication system comprises: a plurality of first devices communicating over a first wireless area network; a plurality of second network devices communicating over a second wireless personal area network; and a plurality of third network devices communicating over a third wireless personal area network, wherein one of the first devices comprises a first wireless transceiver communicating over the first wireless area network, a second wireless transceiver communicating over the second wireless personal area network, and a processor coordinating communications between the first wireless area network and the second wireless personal area network, and wherein another one of the first devices comprises a third wireless transceiver communicating over the first wireless area network, a fourth wireless transceiver communicating over the third wireless personal area network, and a processor coordinating communications between the first wireless area network and the third wireless personal area network.

The first wireless area network may be an IEEE 802.11 wireless local area network. At least one of the second and third wireless personal area networks may be an IEEE 802.15.4 wireless personal area network.

As another aspect of the invention, an access port apparatus is between a wireless area network including a plurality of first devices and a wireless personal area network including a plurality of second network devices. The access port apparatus comprises: a first wireless transceiver communicating over the wireless area network; a second wireless transceiver communicating over the wireless personal area network; and a processor cooperating with the first wireless transceiver to communicate over the wireless area network and cooperating with the second wireless transceiver to communicate over the wireless personal area network, the processor coordinating communications between the wireless area network and the wireless personal area network.

The wireless personal area network may be a mesh-type wireless personal area network. The access port apparatus may be a network coordinator of the mesh-type wireless personal area network. At least some of the second network devices may communicate with the processor over the mesh-type wireless personal area network.

### BRIEF DESCRIPTION OF THE DRAWINGS

A full understanding of the invention can be gained from the following description of the preferred embodiments when read in conjunction with the accompanying drawings in which:
Figure 1 is a block diagram of a wireless communication network in accordance with the present invention.
Figure 2 is a block diagram of a hybrid access point (HAP) bridge employing a first IEEE 802.11 wireless local area network (WLAN) transceiver, a second IEEE 802.15.4 low rate - wireless personal area network (LR-WPAN) transceiver and an optional Ethernet bus controller in accordance with an embodiment of the invention.
Figure 3 is a block diagram of a wireless network clustering (WNC) communication system including a plurality of the HAP bridges of Figure 2 and a plurality of network devices (NDs) in accordance with an embodiment of the invention.
Figure 4 is a block diagram of an access point employing a wireless IEEE 802.11 transceiver and a wired Ethernet bus.
Figure 5 is a block diagram of one of the NDs of Figure 3 employing an IEEE 802.15.4 (LR-WPAN) transceiver.
Figure 6 is a block diagram of a HAP bridge, which is similar to the HAP bridge of Figure 2, except that the NDs are configured in a star-type configuration.

### DESCRIPTION OF THE PREFERRED EMBODIMENTS

As employed herein, the term "wireless area network" means a "wireless metropolitan area network", a "wireless local area network", or a "wireless personal area network".

As employed herein, the term "wireless" shall expressly include, but not be limited to, radio frequency, infrared, wireless area networks, IEEE 802.11 (*e.g.*, 802.11a; 802.11b; 802.11g), IEEE 802.15 (*e.g.*, 802.15.1; 802.15.3, 802.15.4), other wireless communication standards, DECT, PWT, pager, PCS, Wi-Fi, Bluetooth™, and cellular.

As employed herein, the term "portable communicating device" shall expressly include, but not be limited to, any portable communicating device having a wireless communication port (*e.g.*, a handheld device; a handheld personal computer (PC); a portable or laptop PC; a Personal Digital Assistant (PDA); a mobile or cellular telephone; a wireless Internet device; a protocol-enabled telephone; a portable wireless device; a handheld remote control; an asset management tag).

As employed herein, the term "network coordinator" (NC) shall expressly include, but not be limited to, any communicating device, which operates as the central controller in a wireless communication network.

As employed herein, the term "network device" (ND) shall expressly include, but not be limited to, any communicating device (*e.g.*, a portable communicating device; a fixed communicating device, such as, for example, switches, motion sensors or temperature sensors as employed in a wirelessly enabled sensor network), which participates in a wireless communication network, and which is not a central controller.

As employed herein, the term "node" includes NDs and NCs.

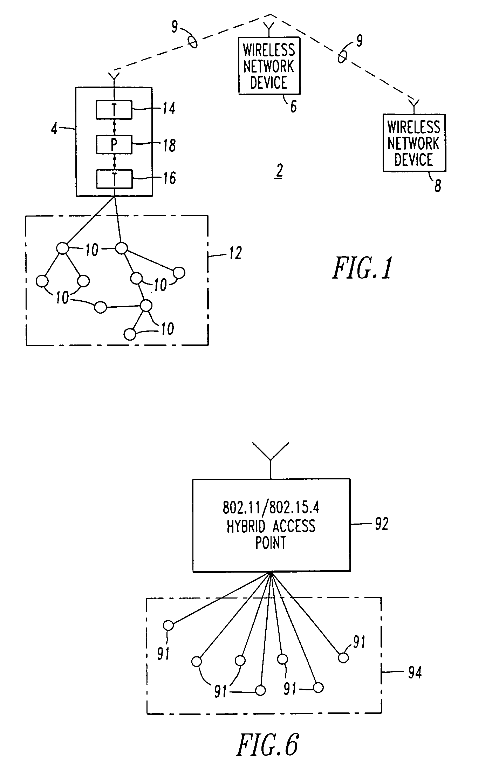

Referring to Figure 1, a wireless communication network 2 is shown. The wireless communication network 2 includes a plurality of devices 4,6,8 communicating over a first wireless local area network 9. As shown with the device 4, a plurality of network devices 10 communicate over a second wireless network 12. The device 4 includes a first wireless transceiver (T) 14 communicating over the first wireless local area network 9, a second wireless transceiver (T) 16 communicating over the second wireless network 12, and a processor (P) 18 coordinating communications between the first wireless local area network 9 and the second wireless network 12.

One or more of the devices 4,6,8, such as 4, may be a network coordinator (NC) of the network devices 10 of the second wireless network 12. Non-limiting examples of the network devices 10 include switches, sensors, actuators, personal computers, and personal digital assistants. A non-limiting example of the first wireless local area network 9 is an IEEE 802.11 wireless local area network. This network 9 may be configured in any suitable fashion (*e.g.*, mesh-type, in which each of the devices 4,6,8 communicates with or through one or more of the other devices 4,6,8; star-type, in which each of the devices 4,6,8 communicates directly with a single device (not shown) on the network 9). A non-limiting example of the second wireless network 12 is a wireless personal area network (WPAN), such as an IEEE 802.15.4 low rate - wireless personal area network (LR-WPAN).

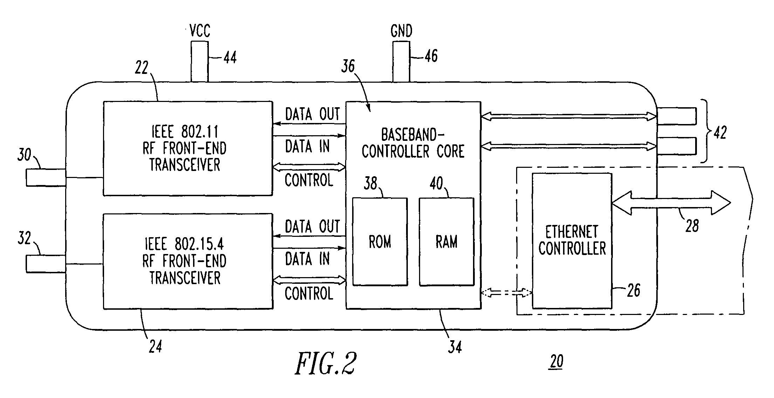

Figure 2 shows a hybrid access point (HAP) bridge 20 employing a first IEEE 802.11 wireless local area network (WLAN) transceiver 22, a second IEEE 802.15.4 low rate - wireless personal area network (LR-WPAN) transceiver 24 and an optional wired local area network controller, such as Ethernet bus controller 26 (shown in phantom line drawing) for communicating over an Ethernet bus 28 (shown in phantom line drawing). Both of the IEEE 802.11 (WLAN) and IEEE 802.15.4 (LR-WPAN) wireless transceivers 22 and 24 may share the same antenna (not shown) or may employ individual antennas 30 and 32 for communicating over a wireless local area network (*e.g.*, network 9 of Figure 1) and a wireless network (network 12 of Figure 1), respectively. The HAP bridge 20, thus, provides an access port between a wireless local area network, such as 9, including a plurality of first devices, such as 4,6,8, and a wireless personal area network, such as 12, including a plurality of network devices, such as 10.

The HAP bridge 20 also includes a suitable processor 34 cooperating with the wireless transceiver 22 to communicate over a wireless local area network, such as 9 of Figure 1, and cooperating with the wireless transceiver 24 to communicate over a wireless personal area network, such as 12 of Figure 1. The processor 34 includes a suitable baseband-controller core 36 having ROM 38, RAM 40 and a programming port 42. A suitable power supply voltage 44 (VCC) is provided with respect to a ground reference 46 (GND). The processor baseband-controller core 36, which includes suitable upper layers (*e.g.*, Application layer and application profile layer, including Presentation sublayer, Session sublayer and Transport sublayer), Network layer and DLC (*e.g.*, MAC and LLC sublayers) layer logic for both IEEE 802.11 and IEEE 802.15.4, coordinates communications between an upper level wireless local area network through the transceiver 22 and a lower level, wireless personal area network through the transceiver 24.

Although one processor 34 is shown, two processors (not shown) may be employed, one for each of the transceivers 22,24. For example, those two processors may employ a suitable interface (*e.g.*, shared memory; parallel interface; serial interface) for communication therebetween.

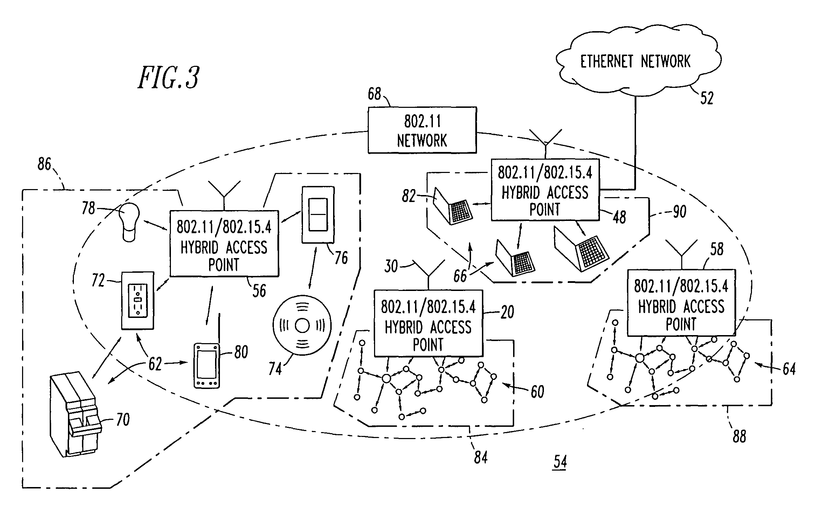

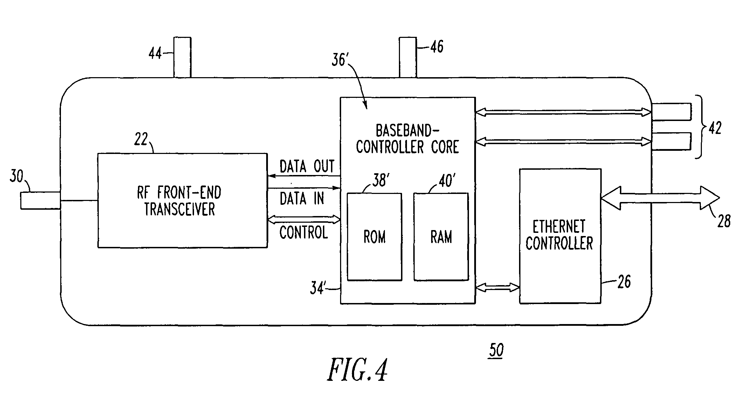

The optional Ethernet bus controller 26 need not be provided, since the first IEEE 802.11 (WLAN) transceiver 22 may relay messages wirelessly through antenna 30 to another access point, such as access point 48 of Figure 3 or access point 50 of Figure 4, having connectivity to a wired Ethernet bus, such as to Ethernet network 52 of Figure 3. Alternatively, another suitable connection to a different backbone network (not shown) (other than the IEEE 802.11 backbone network 9 of Figure 1) may be provided. Hence, the only necessary "wired" connection for the HAP bridge 20 of Figure 2 is to a suitable source of electrical power (*e.g.*, VCC 44 and GND 46; a battery; another suitable source of DC power; internal or external AC/DC power).

The overall function of the HAP bridge 20 is shown in the wireless network clustering (WNC) communication system 54 of Figure 3. Each of the three HAP bridges 20,56,58 serves as a "regional" network coordinator (NC) for a corresponding group of mesh-type LR-WPAN network devices (NDs) 60,62,64, respectively. Although the WNC communication system 54 is wireless, zero, one or more of the HAP bridges, such as 48, may provide a bridge to a suitable wired network, such as the Ethernet network 52. The WNC communication system 54, as shown, employs four different HAP bridges 20,48,56,58 between a plurality of NDs 60,66,62,64, respectively, and an IEEE 802.11 backbone network 68 between such HAP bridges. Each of the HAP bridges 20,48,56,58 employs a relatively higher speed, wireless communication network interface through its IEEE 802.11 transceiver (*e.g.*, transceiver 22 of Figure 2) and antenna 30, in order to form an upper tier of communications between such HAP bridges.

The HAP bridges 56,58, which include no optional Ethernet controller 26 (Figure 2), are similar to the HAP bridge 20 of Figure 2. The HAP bridge 48 is similar to the HAP bridge 20 and includes the optional Ethernet controller 26 (Figure 2) to the wired Ethernet network 52. Although four HAP bridges 20,48,56,58 are shown, the system 54 may employ one or more of such bridges. Non-limiting examples of the various NDs 60,66,62,64 include switches, such as a circuit breaker 70 and a receptacle 72; sensors, such as a temperature sensor 74; actuators, such as a manual light switch 76 and an automatic light control 78; mesh-type NDs 60,64; star-type NDs 66; a PDA 80; and a portable PC 82.

Each of the HAP bridges 20,56,58 interfaces to a mesh-type wireless personal area network (WPAN) 84,86,88, respectively, and is a network coordinator (NC) of the corresponding mesh-type WPAN. The corresponding NDs 60,62,64 communicate with the corresponding processor (*e.g.*, processor 34 of Figure 2) of the HAP bridges 20,56,58 over the mesh-type WPANs 84,86,88, respectively. The HAP bridges 20,56,58 employ a suitable routing algorithm for routing messages between the NDs 60,62,64 and such HAP bridges 20,56,58, respectively. For example, with the HAP bridge 56, at least some of the NDs 62 communicate with the network coordinator (NC) through at least another one (*e.g.*, NDs 72 and 76) of such NDs 62 over the mesh-type wireless personal area network 86. For example, the NC 56 and the NDs 62 employ a DSR algorithm for routing communications over the mesh-type wireless personal area network 86.

In contrast to the mesh-type WPANs 84,86,88, the HAP bridge 48 interfaces to and is the network coordinator (NC) of a star-type wireless personal area network 90. Here, all of the NDs 66 communicate directly with that NC 48 over the star-type wireless personal area network 90.

The NDs 60,62,64 are full function communication devices (*e.g.*, devices, which can create their own "regional" ad-hoc, mesh-type network 84,86,88, respectively), which rely on the corresponding HAP bridge 20,56,58, respectively, to forward messages to more remote sections of the overall network (*e.g.*, through the IEEE 802.11 wireless network 68 and/or through the Ethernet wired network 52 through the HAP bridge 48). For example, the LR-WPAN NDs 62 and the "regional" ad-hoc, mesh-type network 86 form a wireless sensor network cluster. Here the various NDs 62 employ the lower level IEEE 802.15.4 wireless network 86 for communication, while the HAP bridges 20,48,56,58 communicate between themselves over the upper level IEEE 802.11 wireless local area network 68. The network 68 may be either a mesh-type or a star-type network.

Other NDs, such as 66 of Figure 3 or 91 of Figure 6, may be reduced function communication devices (*e.g.*, slave devices), which rely on HAP bridges 48 or 92 to serve as a Network Coordinator device (*e.g.*, master device; hub) in a star-type wireless personal area network 90,94, respectively. For example, the wireless personal area network 94 is a star-type wireless personal area network. The HAP bridge 92 is a network coordinator (NC) of the star-type wireless personal area network 94. All of the NDs 91 communicate directly with the NC 92 over the star-type wireless personal area network 94.

Figure 4 shows the access point 50 employing the IEEE 802.11 transceiver 22 and the Ethernet bus controller 26. The access point 50 is similar to the HAP bridge 20 of Figure 2, except that the processor 34' includes a suitable baseband-controller core 36' having ROM 38' and RAM 40'. The processor baseband-controller core 36', which includes suitable upper layers (*e.g.*, Application layer and application profile layer, including Presentation sublayer, Session sublayer and Transport sublayer), Network layer and DLC (*e.g.*, MAC and LLC sublayers) layer logic for both IEEE 802.11 and IEEE 802.3 (Ethernet), coordinates communications between a wireless local area network (*e.g.*, network 68 of Figure 3) through the transceiver 22 and antenna 30 and an Ethernet network (*e.g.*, network 52 of Figure 3) through the Ethernet controller 26.

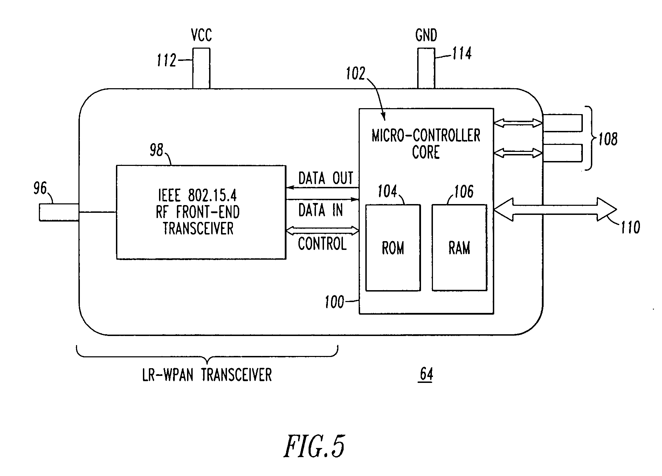

Figure 5 shows one of the NDs 64 of Figure 3. The ND 64 includes an antenna port 96, an RF front-end transceiver 98 for an IEEE 802.15.4 (LR-WPAN) wireless communication network, such as network 88 of Figure 3, a processor 100 having a micro-controller core 102 with ROM 104, RAM 106, a programming port 108 and a sensor bus 110. The sensor bus 110 may include, for example, one or more analog-to-digital inputs, one or more digital-to-analog outputs, one or more UART ports, one or more Serial Peripheral Interface (SPI), and one or more digital I/O lines (not shown). The supply voltage 112 (VCC) may be, for example, about 3.0 to about 3.3 VDC, although any suitable voltage with respect to a ground reference 114 (GND) may be employed (*e.g.*, 5 VDC, 1 VDC). The micro-controller core 102 may have, for example, ROM code space of about 32 kb and RAM space of about 2kb. The processor micro-controller core 102, which includes suitable upper layers (*e.g.*, Application layer and application profile layer, including Presentation sublayer, Session sublayer and Transport sublayer), Network layer and DLC (*e.g.*, MAC and LLC sublayers) layer logic for IEEE 802.15.4, supports communications with the LR-WPAN through the transceiver 98 and the antenna 96.

The WNC communication system 54 of Figure 3 provides a variety of advantages and benefits. A two-tier wireless communication network permits most message traffic to be located on one or more lower wireless tiers, such as 84,86,88,90, thereby reducing the overall demand for the bandwidth of the upper wireless tier 68. This also minimizes latency by providing a "regional" network coordinator (NC) through each of the HAP bridges 20,48,56,58. The relatively higher speed backbone wireless local area network 68 between such HAP bridges enables messages to traverse relatively longer distances with relatively low latency, requiring relatively fewer hops (between the NDs 60,62,64,66), and relatively less network congestion than compared to a single ad-hoc network (not shown) composed entirely of LR-WPAN NDs. Furthermore, the relatively lower speed wireless communication networks 84,86,88 between the respective NDs 60,62,64 substantially reduces the cost of communication between those devices (*e.g.*, the relatively low communication cost for IEEE 802.15.4) as compared to the relatively higher cost of communication (*e.g.*, for IEEE 802.11) between the "regional" NCs 20,48,56,58.

An additional significant benefit of the WNC communication system 54 is that no wired infrastructure needs to be added to retrofit this system into an existing building (*e.g.*, commercial office facilities; industrial plants; warehouses; retail stores; residences). For example, the HAP bridges 20,48,56,58 and respective NDs 60,66,62,64 (*e.g.*, employing internal or external AC/DC (not shown)) may simply be plugged into existing power outlets (e.g., conventional AC receptacles, low voltage DC power wiring, Power over Ethernet) (not shown), and the networks 84,86,88,90,68 configure themselves.

Although the exemplary WNC system 54 employs IEEE 802.15.4 (LR-WPAN) for the "regional" wireless interface to relatively low cost NDs, and IEEE 802.11 (WLAN) for the wireless backbone between the HAP bridges 20,48,56,58, a wide range of physical layer and MAC layer wireless communication protocols may be employed for one or both of such wireless networks.

Although ad-hoc, mesh type networks 84,86,88 have been disclosed for purposes of providing a self-configuring, wireless communication network, which requires no new wires, any suitable routing protocol or algorithm (*e.g.*, DSR, Ad hoc on Demand Distance Vector (AODV), or proactive source routing (PSR)) may be employed. In a PSR routing technique, the NC appends a complete list of addresses from that source to the destination ND for downstream communications (from the NC). For multi-hop downstream communications, the receiving and repeating ND removes its address from the list of addresses from that ND to the next or destination ND. For upstream communications (toward the NC), the originating ND appends its address in the original message to an upstream node. For multi-hop upstream communications, the receiving and repeating ND appends its address to the list of addresses from that ND to the next upstream ND or to the NC.

As another alternative, the relatively lower level, mesh-type LR-WPAN NDs 60,62,64 may be replaced with star-oriented LR-WPAN NDs (*e.g.*, 66 of Figure 3 and 91 of Figure 6), which are placed within a predetermined range of the wireless hybrid access point, in order that no hops are required (*e.g.*, HAP bridges 48 of Figure 3 and 92 of Figure 6). Nevertheless, this configuration is still wireless in that wireless communication is provided between the wireless hybrid access point bridges 48,92 and the respective star-oriented LR-WPAN NDs 66,91, and wireless communication (*e.g.*, mesh-type; star-type) is provided between the various wireless access points (*e.g*., 20,48,56,58 of Figure 3).

In a mesh-type network, such as 84, 86 or 88 of Figure 3, the exemplary WNC system 54 reduces the cost of communication and, also, reduces the number of hops that a typical ND, such as 60, 62 or 64, respectively, of Figure 3, must employ for communication and, thus, reduces the number of "repeated" messages as compared to message counts in a single LR-WPAN, single NC wireless communication network (not shown).

This also reduces the cost of communication in a star-type network, such as 90 of Figure 3 or 94 of Figure 6. Regardless of the type of lower level wireless network, the wireless access points, such as 20, 48, 56 or 58 of Figure 3, may forward messages to other "regional" clusters of other LR-WPAN NDs by employing a relatively higher speed IEEE 802.11 (WLAN) "wireless backbone", such as 68 of Figure 3. The IEEE 802.11 (WLAN) access points, such as 20, 48, 56 or 58 of Figure 3, serve as "regional" NCs for a plurality of LR-WPAN domains. These wireless access points, which may be, for example, mesh-type or star-type, permit the exchange of messages between the different LR-WPAN "regional" domains without requiring any wired infrastructure.

Although the NDs for a particular LR-WPAN may have a unique physical space for each network, one ND on one network may be adjacent to or proximate another ND on another network. In other words, a particular LR-WPAN may overlap the area of or have the identical physical space as the area or space of another LR-WPAN.

While specific embodiments of the invention have been described in detail, it will be appreciated by those skilled in the art that various modifications and alternatives to those details could be developed in light of the overall teachings of the disclosure. Accordingly, the particular arrangements disclosed are meant to be illustrative only and not limiting as to the scope of the invention which is to be given the full breadth of the claims appended and any and all equivalents thereof.

## Claims

1. A wireless communication network comprising:
a plurality of first devices communicating over a first wireless area network; and
a plurality of second network devices communicating over a second wireless network,
wherein one of said first devices comprises a first wireless transceiver communicating over said first wireless area network, a second wireless transceiver communicating over said second wireless network, and a processor coordinating communications between said first wireless area network and said second wireless network.

2. The wireless communication network of Claim 1 wherein said one of said first devices is a network coordinator of said second network devices of said second wireless network.

3. The wireless communication network of Claim 1 wherein said second network devices are selected from the group comprising a switch, a sensor, an actuator, a personal computer, and a personal digital assistant.

4. The wireless communication network of Claim 1 wherein said first wireless area network is an IEEE 802.11 wireless local area network.

5. The wireless communication network of Claim 1 wherein said first wireless area network is a mesh-type or star-type wireless local area network.

6. The wireless communication network of Claim 1 wherein said second wireless network is a wireless personal area network.

7. The wireless communication network of Claim 6 wherein said wireless personal area network is an IEEE 802.15.4 wireless personal area network.

8. The wireless communication network of Claim 6 wherein said wireless personal area network is a star-type wireless personal area network; wherein said one of said first devices is a network coordinator of said star-type wireless personal area network; and wherein all of said second network devices communicate directly with said network coordinator over said star-type wireless personal area network.

9. The wireless communication network of Claim 6 wherein said wireless personal area network is a mesh-type wireless personal area network;
wherein said one of said first devices is a network coordinator of said mesh-type wireless personal area network; and wherein at least some of said second network devices communicate with said network coordinator through at least another one of said second network devices over said mesh-type wireless personal area network.

10. The wireless communication network of Claim 9 wherein said network coordinator and said second network devices employ a DSR algorithm for routing communications over said mesh-type wireless personal area network.

11. The wireless communication network of Claim 1 wherein said first wireless transceiver includes a first antenna for communicating over said first wireless area network; and wherein said second wireless transceiver includes a second antenna for communicating over said second wireless network.

12. The wireless communication network of Claim 1 wherein said processor includes a controller for communicating over a wired local area network.

13. A wireless network clustering communication system comprising:
a plurality of first devices communicating over a first wireless area network;
a plurality of second network devices communicating over a second wireless personal area network; and
a plurality of third network devices communicating over a third wireless personal area network,
wherein one of said first devices comprises a first wireless transceiver communicating over said first wireless area network, a second wireless transceiver communicating over said second wireless personal area network, and a processor coordinating communications between said first wireless area network and said second wireless personal area network, and
wherein another one of said first devices comprises a third wireless transceiver communicating over said first wireless area network, a fourth wireless transceiver communicating over said third wireless personal area network, and a processor coordinating communications between said first wireless area network and said third wireless personal area network.

14. The wireless network clustering communication system of Claim 13 wherein said one of said first devices is a network coordinator of said second network devices of said second wireless personal area network; and wherein said another one of said first devices is a network coordinator of said third network devices of said third wireless personal area network.

15. The wireless network clustering communication system of Claim 13 wherein said first wireless area network is an IEEE 802.11 wireless local area network; and wherein at least one of said second and third wireless personal area networks is an IEEE 802.15.4 wireless personal area network.

16. The wireless network clustering communication system of Claim 13 wherein one of said second and third wireless personal area networks is a star-type wireless personal area network; wherein one of said first devices is a network coordinator of said star-type wireless personal area network; and wherein all of said second or third network devices communicate directly with said network coordinator over said star-type wireless personal area network.

17. An access port apparatus between a wireless area network including a plurality of first devices and a wireless personal area network including a plurality of second network devices, said access port apparatus comprising:
a first wireless transceiver communicating over said wireless area network;
a second wireless transceiver communicating over said wireless personal area network; and
a processor cooperating with said first wireless transceiver to communicate over said wireless area network and cooperating with said second wireless transceiver to communicate over said wireless personal area network, said processor coordinating communications between said wireless area network and said wireless personal area network.

18. The access port apparatus of Claim 17 wherein said wireless area network is an IEEE 802.11 wireless local area network.

19. The access port apparatus of Claim 17 wherein said wireless personal area network is an IEEE 802.15.4 wireless personal area network.

20. The access port apparatus of Claim 17 wherein said wireless personal area network is a mesh-type wireless personal area network; wherein said access port apparatus is a network coordinator of said mesh-type wireless personal area network; and wherein at least some of said second network devices communicate with said processor over said mesh-type wireless personal area network.
